# EUROPÄISCHE PATENTSCHRIFT

(11) **EP 0 813 286 B1**
(45) Veröffentlichungstag und Bekanntmachung des Hinweises auf die Patenterteilung: **07.09.2005**
(21) Anmeldenummer: 97890043.9
(22) Anmeldetag: 10.03.1997
(51) Int. Cl.: H02K 5/22, H02K 17/30, H02K 17/08

(54) **Steckerteil für einen Elektromotor**
Connector for electromotor
Connecteur pour électromoteur

(30) Priorität: 10.06.1996 AT 33996 U
(43) Veröffentlichungstag der Anmeldung: 17.12.1997
(73) Patentinhaber: ATB Austria Antriebstechnik Aktiengesellschaft, 8724 Spielberg (Steiermark) (AT)
(72) Erfinder: Sommer, Rudolf, 8715 St. Lorenzen 94/3 (AT)
(74) Vertreter: Beer, Manfred

(56) Entgegenhaltungen:
- EP-A- 0 274 635
- EP-A- 0 516 442
- EP-A- 0 593 862
- DE-A- 4 342 761
- DE-U- 9 102 650
- PATENT ABSTRACTS OF JAPAN vol. 013, no. 521 (M-896), 21. November 1989 & JP 01 211673 A (MATSUSHITA REFRIG CO LTD), 24. August 1989

## Beschreibung

Die Erfindung betrifft einen Steckerteil mit den Merkmalen des einleitenden Teils des Anspruch 1.

Elektromotoren sind häufig mit Kondensatoren ausgerüstet, die in der Regel am Elektromotor befestigt werden. Hiezu werden häufig Schellen od. dgl. befestigt.

Aus der AT 000 159 U1 ist ein Steckerteil bekannt, der am Elektromotor festgelegt werden kann. Der bekannte Steckerteil weist für die Kontaktierung der Drähte von Statorwicklungen von Rasenmähermotoren einen Fuß auf, der an der einen Stirnfläche des Statorpaketes aufliegt. Der Steckerteil besitzt weiters einen Fuß mit zwei vorspringenden Zinken, die an den voneinander abgekehrten Seiten zweier benachbarter Nutisolationen eingreift, wobei zwischen den beiden Zinken ein zwischen die benachbarten Nutisolationen eingreifender Vorsprung vorgesehen ist. Im Steckerteil sind Anschlußkontakte für die Netzzuleitung und Anschlußkontakte für die Kondensatorableitung vorgesehen.

Aus der JP 01 211673 A ist ein an einem Motorgehäuse befestigter Steckerteil bekannt, an dessen Kappe ein Kondensator befestigt ist.

Bei der aus der JP 01 211673 A sind gesonderte Verdrahtungen für den elektrischen Anschluß des Kondensator entbehrlich.

Die EP 0 274 635 A zeigt zum Befestigen eines Kondensators an dem Gehäuse eines Motors eine Federklemme, die am Gehäuse des Motors festlegbar sind.

Aus der EP 593 862 A ist ein Anschlußgehäuse für elektrische Geräte bekannt, das dessen Stromanschlußkabelanschluß bildet. An dem Anschlußgehäuse kann ein Betriebselement, beispielsweise ein Kondensator, aufgeschoben werden.

Die EP 0 516 442 A zeigt ein Steckerteil für einen Elektromotor, mit dem ein Kondensator durch Aufstecken verbunden werden kann. Dieser Steckerteil ist ausschließlich für das elektrische Kontaktieren des Kondensators und für dessen leitende Verbindung mit dem Motor ausgelegt.

Die DE 43 42 761 A zeigt ein Anschlußgehäuse für einen Elektromotor, in dessen Wand ein Loch vorgesehen ist, durch das ein Kondensator über seinen Flansch eingesteckt und hiefür eine Sicherungsscheibe festgelegt werden kann.

Die DE 91 02 650 U zeigt einen Motor, an dessen Gehäuse ein Anschlußkasten angeschraubt ist. In dem Anschlußkasten sind Steckerstifte für den elektrischen Anschluß von Bauelementen, wie einem Kondensator, angeordnet.

Der Erfindung liegt die Aufgabe zu Grunde, einen Steckerteil der eingangs genannten Art so weiterzubilden, daß ein Kondensator einfach und sicher derart befestigt werden kann, daß er sich auch bei starken Vibrationen nicht vom Steckerteil lösen kann.

Erfindungsgemäß wird diese Aufgabe mit einem Steckerteil gelöst, der die Merkmale des unabhängigen Anspruch 1 aufweist.

Bei der erfindungsgemäßen Ausbildung des Steckerteils sind zusätzliche Maßnahmen zum Befestigen des Kondensators am Elektromotor entbehrlich, und es ergibt sich der Vorteil, daß die zum Kondensator führenden Leitungen unmittelbar in die entsprechenden Kontakte (Steckbuchsen) im Steckerteil eingesteckt werden können, so daß diese nur kurz ausgebildet sein brauchen.

Bevorzugte und vorteilhafte Ausgestaltungen des erfindungsgemäßen Steckerteils sind Gegenstand der Unteransprüche.

Eine bevorzugte Ausführungsform des erfindungsgemäßen Steckerteils ist beispielhaft in den angeschlossenen Zeichnungen gezeigt und in der nachfolgenden Beschreibung erläutert.

Es zeigt:
Fig. 1 einen Elektromotor, an dem über einen erfindungsgemäßen Steckerteil ein Kondensator befestigt ist,
Fig. 2 ein Steckerteil von oben der Fig. 1 aus gesehen,
Fig. 3 ein Steckerteil von unten der Fig. 1 aus gesehen,
Fig. 4 den Steckerteil in Seitenansicht und im Bereich eines Faches die Aufnahme einer Gewindemutter zum Befestigen des Kondensator geschnitten,
Fig. 5 den Steckerteil von links der Fig. 1 aus gesehen und
Fig. 6 den Steckerteil von unten der Fig. 1 aus gesehen und im Schnitt längs der Linie VI-VI von Fig. 5.

Ein Steckerteil 15 besteht aus einem Gehäuse 20 und einem Fuß 21, wobei zwischen Gehäuse 20 und Fuß 21 eine vom Fuß 21 im wesentlichen senkrecht abstehende Wand 22 mit abgewinkelten Enden 22' vorgesehen ist. Die Wand 22 ist durch dreieckförmige Rippen 23 gegenüber dem Gehäuse 20 abgestützt.

Der Fuß 21 des Steckerteils 15 besitzt zwei vorstehende Zinken 24, deren einander zugekehrte Ränder 25 zum freien Ende der Zinken 24 hin aufeinander zu konvergieren und die federnd ausgebildet sind. Zwischen den beiden Zinken 24 ist noch ein vorspringender Teil 26 vorgesehen. Wenn der Steckerteil 15 mit seinem Fuß 21 an Nutenisolierungen 13 der Statorwicklung 5 bzw. deren Enden angesetzt wird, legen sich die Ränder 25 der beiden vorspringenden Zinken 24 an die Außenflächen von zwei benachbarten Nutenisolierungen 13 an und der Vorsprung 26 greift in den Raum zwischen den beiden Nutenisolierungen 13 ein. Auf diese Weise wird der Steckerteil 15 am Motor 1 über die Nutenisolierungen 13 reib- und formschlüssig festgehalten.

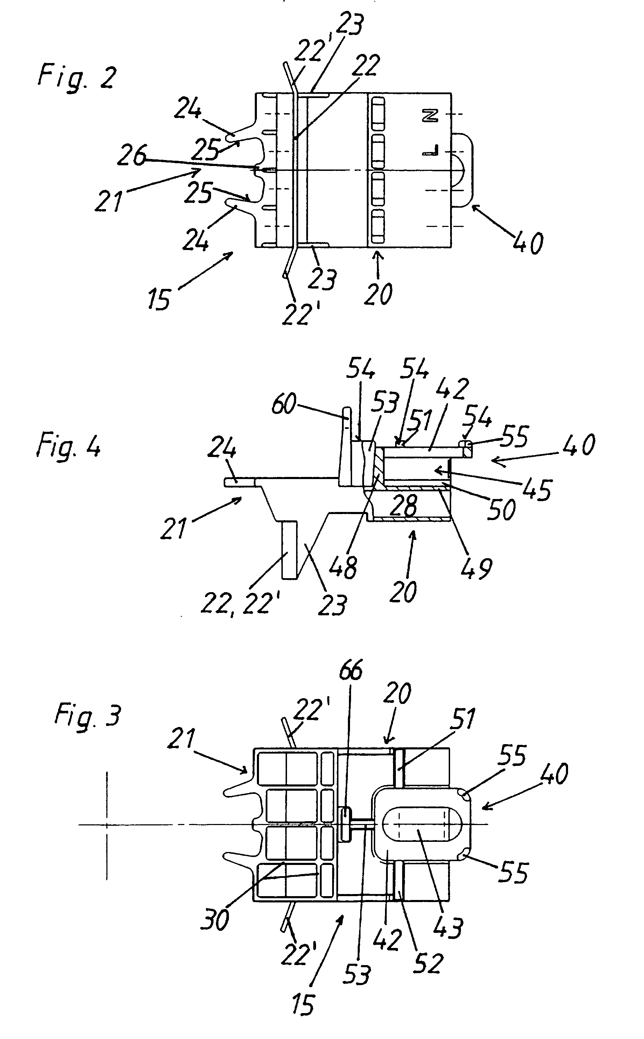

Wie aus Fig. 3 ersichtlich, sind an der Unterseite sowohl des Fußes 21 als auch des Gehäuseteils 20 des Steckerteils 15 Aussparungen vorgesehen, zwischen welchen Versteifungsrippen 30 angeordnet sind. So wird Material und Gewicht eingespart und dennoch eine hinreichende Stabilität des Steckerteils 15 erreicht.

Wie in Fig. 4 gezeigt, befinden sich im Steckerteil 15 Aufnahmeräume 28, in welchen Kontaktzungen/Kontakthülsen oder Stecker/Steckhülsen als Kontakte aufgenommen sind. Die Kontaktzungen/Kontakthülsen oder Stecker/Steckhülsen können im Steckerteil 15 durch federnde Zungen festgehalten werden.

Auf dem die Räume 28 für die als Steckbuchsen dienenden Kontakte aufnehmenden Teil 20 (Gehäuse) des Steckerteils 15 ist auf der der Wand 22 gegenüberliegenden Seite bei dem erfindungsgemäßen Steckerteil 15 eine Halterung 40 für einen Kondensator 41 angeordnet.

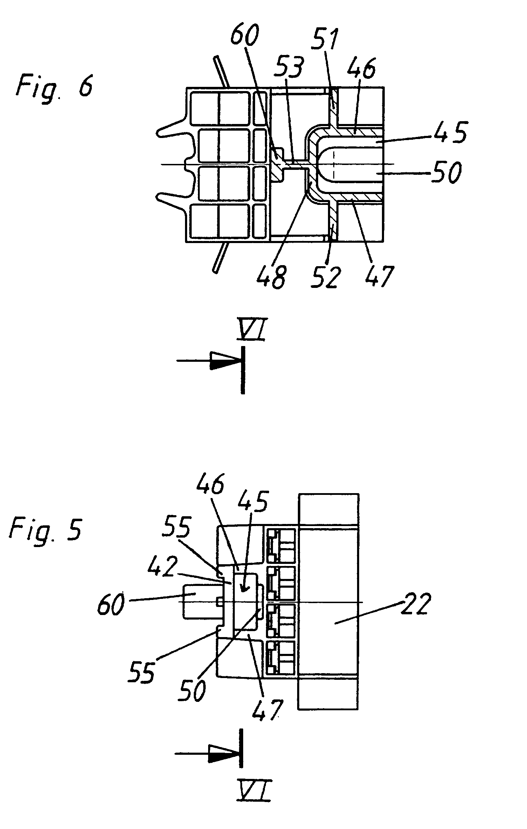

Diese Halterung 40 besteht aus einer Wand 42, in der eine als Langloch ausgebildete Öffnung 43 für den Durchtritt des Gewindebolzens des Kondensator 41 ausgespart ist. Diese Wand 42 begrenzt die dem Steckerteil 15 gegenüberliegende Seite eines Faches 45, das auf drei Seiten (Fig. 6) durch Wände 46, 47, 48 und nach unten hin durch die eine Wand 49 des die Räume 28 für die Kontakte aufweisenden Teils 20 des Steckerteils 15 begrenzt wird. Das Fach 45 ist auf der Seite offen, auf der auch die Räume 28 für die Kontakte offen sind.

Der Öffnung 43 in der Wand 42 gegenüberliegend ist in der Wand 49 des Steckerteils 15, die das Fach 45 auf der der Wand 42 gegenüberliegenden Seite begrenzt, eine zur offenen Seite des Faches 45 hin offene Nut 50 ausgespart.

Außerhalb der drei das Fach 45 seitlich bzw. auf der der offenen Seite des Faches 45 gegenüberliegenden Seite begrenzenden Wände 46, 47, 48 sind vom Steckerteil 15 abstehende Leisten 51, 52, 53 vorgesehen, deren Endflächen 54 über die die Öffnung 43 für den Gewindebolzen des Kondensators 41 aufweisende Wand 42 des Faches 45 überstehen und als Stützen für die den Gewindebolzen umgebende Stirnfläche 44 des Kondensatorgehäuses dienen. Zur Abstützung des Kondensators 41 sind in den im Bereich der offenen Seite des Faches 45 liegenden Ecken der das Langloch 43 für den Gewindebolzen des Kondensators 41 aufweisenden Wand 42 gebogene Rippen 55 vorgesehen, deren Endflächen ebenfalls als Auflage für die Stirnfläche 44 des Kondensators 41 dienen.

Vom Teil 20 des Steckerteils 15 steht weiters eine Leiste 60 nach oben ab, die als an der Umfangsfläche des Kondensatorgehäuses angreifender Anschlag dient.

Alle Teile des Steckerteils 15 und der Halterung 40 für den Kondensator 41, insbesondere die die Öffnung 43 für den Gewindebolzen aufweisende Wand 42, die Stützleisten 51, 52, 53, sowie die Anschlagleiste 60 als auch die Rippen 55 in den Ecken der Wand 42, können einstückig, insbesondere als einstückiger Spritzgußteil, ausgebildet sein.

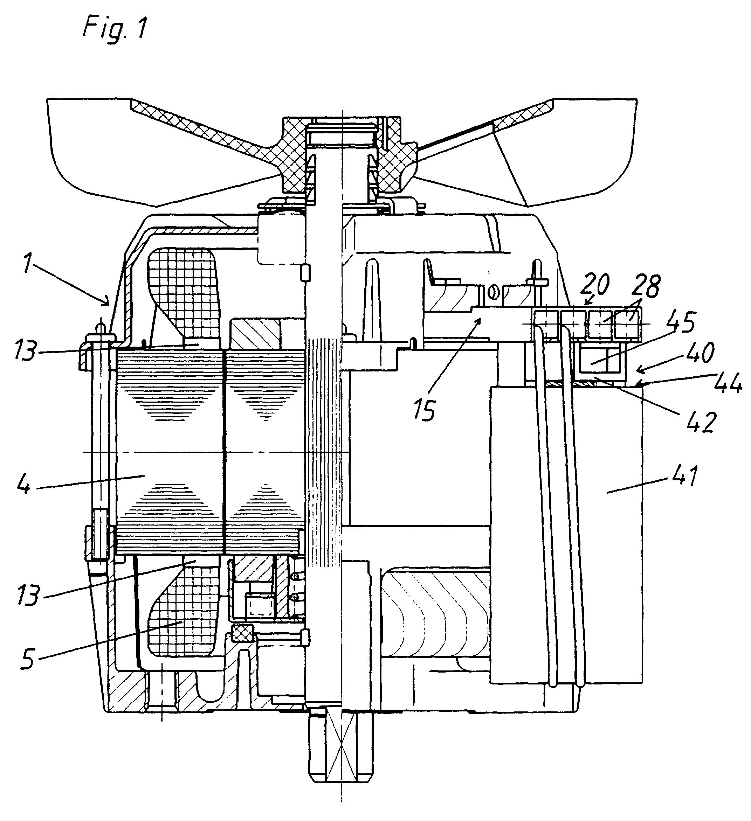

Zum Befestigen eines Kondensators 41 wird in das Fach 45 eine Mehrkantgewindemutter eingelegt, über den Gewindebolzen des Kondensators eine Federscheibe gesteckt, dann der Gewindebolzen durch die Öffnung 43 in der Wand 42 gesteckt und schließlich der Kondensator 41 durch Verdrehen mit seinen Gewindebolzen in die im Fach 45 aufgenommene Mutter geschraubt, so daß der Kondensator 41 gegen die Stirnflächen der drei Leisten 51, 52, 53 und der zwei Rippen 55 gezogen wird, wobei seine seitliche (bezogen auf die Motorachse: radiale) Ausrichtung durch die als Anschlag dienende Leiste 60 definiert wird. Hierauf können die zwei zum Kondensator 41 führenden elektrischen Leitungen in die entsprechenden Buchsen im Steckerteil 15 eingesteckt werden, so daß der Kondensator 41 elektrisch leitend mit dem Elektromotor 1 verbunden ist, wie dies in Fig. 1 gezeigt ist. Bei festgeschraubtem Kondensator 41 ragt das freie Ende seines Gewindebolzens in die Nut 50 hinein.

Die Erfindung hat auch den Vorteil, daß der Kondensator im eingeschraubten und angeschlossenen Zustand unverlierbar ist.

Auch bei starken Vibrationen kann sich der Kondensator nicht vom Steckerteil lösen.

Zusammenfassend kann ein Ausführungsbeispiel der Erfindung wie folgt dargestellt werden:

An einem Steckerteil 15, der über einen Fußteil 21 an einem Elektromotor 1, insbesondere an den Nutisolierungen 13 der Statorwicklung 5 festlegbar ist, ist auf dem Teil 20, der die Räume 28 für Steckerkontakte aufweist, eine Halterung 40 für den Kondensator 41 vorgesehen. Die Halterung 40 weist ein Fach 45 auf, das auf der vom Steckerteil 15 entfernt liegenden Seite duch eine Wand 42 begrenzt wird, in der eine Öffnung 43 für den Durchtritt der Gewindeschraube des Kondensators 41 vorgesehen ist. In das Fach 45 wird eine Mehrkantmutter eingesteckt und der Kondensator 41 durch Eindrehen seines Gewindebolzens in die Mehrkantmutter an der Halterung 40 und damit am Steckerteil 15 befestigt. Zum sicheren Abstützen des Kondensators 41 sind auf bzw. neben der Wand 42, über diese in Richtung auf den Kondensator 41 zu, vorstehende Leisten 51, 52, 53 bzw. Rippen 55 vorgesehen.

## Patentansprüche

1. Steckerteil (15), der an einem Elektromotor (1), insbesondere über Rastmittel festlegbar ist und der mit Kontakten für den Anschluß elektrischer Leitungen ausgerüstet ist, wobei an dem die Kontakte aufnehmenden Teil (20) des Steckerteils (15) eine Halterung (40) für einen Kondensator (41) vorgesehen ist, **dadurch gekennzeichnet, daß** die Halterung (40) zum Befestigen des Kondensators (41) über einen an ihm vorgesehenen Gewindebolzen eine Öffnung (43) aufweist, durch welche zum Festlegen des Kondensators (41) der Gewindebolzen des Kondensators (41) einführbar und in welche der Gewindebolzen des Kondensators (41) mit Hilfe einer Gewindemutter festlegbar ist, und daß neben der Öffnung (43) für die Gewindebolzen des Kondensators (41) ein.an der Umfangsfläche des Kondensators (41) anliegender Anschlag (60) vorgesehen ist.

2. Steckerteil nach Anspruch 1, **dadurch gekennzeichnet, daß** die Öffnung (43) für den Gewindebolzen des Kondensators (41) in einer ein Fach (45) für die Aufnahme einer Gewindemutter begrenzenden Wand (42) vorgesehen ist.

3. Steckerteil nach Anspruch 2, **dadurch gekennzeichnet, daß** das Fach (45) für die Aufnahme der Gewindemutter seitlich von zwei von dem die Kontakte aufnehmenden Teil (20) des Steckerteils (15) abstehenden Wänden (46, 47) begrenzt ist.

4. Steckerteil nach Anspruch 2 oder 3, **dadurch gekennzeichnet, daß** das Fach (45) für die Aufnahme der Gewindemutter an derselben Seite des Steckerteils (15) hin offen ist, wie die die Kontakte aufnehmenden Räume (28) des Steckerteils (15).

5. Steckerteil nach Anspruch 3 oder 4, **dadurch gekennzeichnet, daß** das Fach (45) auf seinem der Öffnung gegenüberliegenden Ende durch eine vom Steckerteil (15) abstehende Wand (48) geschlossen ist.

6. Steckerteil nach einem der Ansprüche 2 bis 5, **dadurch gekennzeichnet, daß** seitlich neben dem Fach (45) mehrere über die die Öffnung (43) für die Aufnahme des Gewindebolzens des Kondensators (41) aufweisende Wand (42) des Faches (45) überstehende Auflagen (54) für die den Gewindebolzen umgebende Stirnwand (44) des Kondensators (41) vorgesehen sind.

7. Steckerteil nach Anspruch 6, **dadurch gekennzeichnet, daß** die Auflagen (54) die Endflächen von vom Steckerteil (15) abstehenden Leisten (51, 52, 53) sind.

8. Steckerteil nach einem der Ansprüche 2 bis 7, **dadurch gekennzeichnet, daß** die die Öffnung (43) für den Gewindebolzen des Kondensators (41) aufweisende Wand (42) des Faches (45) über die Öffnung des Faches (45) vorsteht.

9. Steckerteil nach einem der Ansprüche 2 bis 8, **dadurch gekennzeichnet, daß** an der die Öffnung (43) für die Aufnahme des Gewindebolzens des Kondensators (41) aufweisenden Wand (42) des Faches (45) im Bereich der Öffnung des Faches (45) nach oben abstehende Rippen (55) für die Abstützung der den Gewindebolzen umgebenden Stirnwand (44) des Kondensators (41) vorgesehen sind.

10. Steckerteil nach einem der Ansprüche 1 bis 9, **dadurch gekennzeichnet, daß** die Öffnung (43) für die Aufnahme des Gewindebolzens des Kondensators (41) als Langschlitz ausgebildet ist.

11. Steckerteil nach einem der Ansprüche 1 bis 10, **dadurch gekennzeichnet, daß** in der den Boden des Faches (45) bildenden Wand (49) des Steckerteils (15) eine zum Fach (45) hin offene, nutartige Vertiefung (50) vorgesehen ist.

12. Steckerteil nach Anspruch 9, **dadurch gekennzeichnet, daß** die Auflagen für die dem Gewindebolzen des Kondensators (41) umgebende Stirnfläche (45) des Kondensators (41) bildenden Rippen (55) auf der die Öffnung (43) für den Gewindebolzen des Kondensators (41) aufweisenden Wand (42) in Eckbereichen derselben, die im Bereich der Öffnung des Faches (45) für die Mutter liegen, angeordnet sind.

13. Steckerteil nach Anspruch 9 oder 12, **dadurch gekennzeichnet, daß** die Rippen (55) gebogene Rippen sind.

## Claims

1. Connector (15), which may be fixed to an electric motor (1), especially by means of a locking mechanism, and which is equipped with contacts for connecting electric leads, a holder (40) for a capacitor (41) being provided on the contact-receiving portion (20) of the connector (15), **characterised in that** the holder (40) has, for securing the capacitor (41) by means of a threaded bolt provided on same, an opening (43) through which the threaded bolt of the capacitor (41) may be inserted to fix the capacitor (41) and in which the threaded bolt of the capacitor (41) may be fixed with the aid of a threaded nut, and **in that** a stop (60), abutting against the peripheral surface of the capacitor (41), is provided beside the opening (43) for the threaded bolt of the capacitor (41).

2. Connector according to claim 1, **characterised in that** the opening (43) for the threaded bolt of the capacitor (41) is provided in a wall (42) delimiting a compartment (45) for receiving a threaded nut.

3. Connector according to claim 2, **characterised in that** the compartment (45) for receiving the threaded nut is delimited laterally by two walls (46, 47) protruding from the contact-receiving portion (20) of the connector (15).

4. Connector according to claim 2 or 3, **characterised in that** the compartment (45) for receiving the threaded nut is open on the same side of the connector (15) as the contact-receiving spaces (28) of the connector (15).

5. Connector according to claim 3 or 4, **characterised in that** the compartment (45) is closed on its end lying opposite the opening by a wall (48) protruding from the connector (15).

6. Connector according to one of claims 2 to 5, **characterised in that**, laterally beside the compartment (45) there is provided a plurality of bearing surfaces (54) for the capacitor (41) end wall (44) surrounding the threaded bolt, which surfaces protrude beyond the compartment (45) wall (42) having the opening (43) for receiving the threaded bolt of the capacitor (41).

7. Connector according to claim 6, **characterised in that** the bearing surfaces (54) are the end faces of ledges (51, 52, 53) protruding from the connector (15).

8. Connector according to one of claims 2 to 7, **characterised in that** the compartment (45) wall (42) which has the opening (43) for the threaded bolt of the capacitor (41) protrudes beyond the opening of the compartment (45).

9. Connector according to one of claims 2 to 8, **characterised in that** upwardly protruding ribs (55) for supporting the capacitor (41) end wall (44) which surrounds the threaded bolt are provided on the compartment (45) wall (42) having the opening (43) for receiving the threaded bolt of the capacitor (41), in the region of the opening of the compartment (45).

10. Connector according to one of claims 1 to 9, **characterised in that** the opening (43) for receiving the threaded bolt of the capacitor (41) is configured as a longitudinal slot.

11. Connector according to one of claims 1 to 10, **characterised in that** a groove-like depression (50), open towards the compartment (45), is provided in the wall (49) of the connector (15) which forms the base of the compartment (45).

12. Connector according to claim 9, **characterised in that** the ribs (55) on the wall (42) having the opening (43) for the threaded bolt of the capacitor (41), which ribs form bearing surfaces for the capacitor (41) end face (45) surrounding the threaded bolt of the capacitor (41), are arranged in corner regions of said wall (42) which lie in the region of the opening of the compartment (45) for the nut.

13. Connector according to claim 9 or 12, **characterised in that** the ribs (55) are curved ribs.

## Revendications

1. Elément de connecteur (15) pouvant être arrêté sur un moteur électrique (1), en particulier via des moyens d'arrêt, ledit élément de connecteur comprenant des contacts pour le raccordement de conducteurs électriques, une fixation pour un condensateur (41) prévue sur la partie (20) contenant les contacts de l'élément de connecteur (15), **caractérisé en ce que** la fixation (40), qui sert à fixer le condensateur (41) au moyen d'un boulon fileté prévu sur celui-ci, présente une ouverture (43) à travers laquelle le boulon fileté du condensateur (41) peut être introduit pour arrêter le condensateur (41) et dans laquelle le boulon fileté du condensateur (41) peut être arrêté à l'aide d'un écrou, et **en ce que**, à côté de l'ouverture (43) pour les boulons filetés du condensateur (41), est prévue une butée (60) adjacente à la surface circonférentielle du condensateur (41).

2. Elément de connecteur selon la revendication 1, **caractérisé en ce que** l'ouverture (43) pour le boulon fileté du condensateur (41) est prévue dans une paroi (42) qui limite un compartiment (45) destiné à recevoir un écrou.

3. Elément de connecteur selon la revendication 2, **caractérisé en ce que** le compartiment (45) destiné à recevoir l'écrou est limité latéralement par deux parois (46, 47) faisant saillie de la partie (20) recevant les contacts de l'élément de connecteur (15).

4. Elément de connecteur selon les revendications 2 ou 3, **caractérisé en ce que** le compartiment (45) destiné à recevoir l'écrou est ouvert sur le même côté de l'élément de connecteur (15) que les cavités (28) recevant les contacts de l'élément de connecteur (15).

5. Elément de connecteur selon les revendications 3 ou 4, **caractérisé en ce que** le compartiment (45) est fermé à son extrémité opposée à l'ouverture par une paroi (48) faisant saillie de l'élément de connecteur (15).

6. Elément de connecteur selon l'une des revendications 2 à 5, **caractérisé en ce que** plusieurs appuis (54), qui font saillie de la paroi (42) du compartiment (45) qui présente l'ouverture (43) destinée à recevoir le boulon fileté du condensateur (41), sont prévus à côté du compartiment (45), appuis sur lesquels repose la paroi de bout (44) du condensateur (41) qui entoure le boulon fileté.

7. Elément de connecteur selon la revendication 6, **caractérisé en ce que** les appuis (54) sont formés par les surfaces terminales de rebords (51, 52, 53) faisant saillie de l'élément de connecteur (15).

8. Elément de connecteur selon l'une des revendications 2 à 7, **caractérisé en ce que** la paroi (42) du compartiment (45) qui présente l'ouverture (43) pour le boulon fileté du condensateur (41), fait saillie de l'ouverture du compartiment (45).

9. Elément de connecteur selon l'une des revendications 2 à 8, **caractérisé en ce que**, sur la paroi (42) du compartiment (45) qui présente l'ouverture (43) destinée à recevoir le boulon fileté du condensateur (41), sont prévues des nervures (55) s'éloignant vers le haut pour l'appui de la paroi de bout (44) du condensateur (41) entourant le boulon fileté.

10. Elément de connecteur selon l'une des revendications 1 à 9, **caractérisé en ce que** l'ouverture (43) destinée à recevoir le boulon fileté du condensateur (41) est conçue sous forme de fente oblongue.

11. Elément de connecteur selon l'une des revendications 1 à 10, **caractérisé en ce que**, dans la paroi (49) de l'élément de connecteur qui forme le fond du compartiment (45), est prévu un creux (50) en forme de rainure ouverte dans la direction du compartiment (50).

12. Elément de connecteur selon la revendication 9, **caractérisé en ce que** les nervures (55) formant les appuis de la paroi de bout (45) du condensateur (41) qui entoure le boulon fileté du condensateur (41), sont disposées dans la paroi (42) qui présente l'ouverture (43) pour le boulon fileté du condensateur (41), à savoir dans les zones d'angle de celle-ci se trouvant au niveau de l'ouverture du compartiment (45) pour l'écrou.

13. Elément de connecteur selon les revendications 9 ou 12, **caractérisé en ce que** les nervures (55) sont des nervures courbées.
